(19) Europäisches Patentamt
European Patent Office
Office européen des brevets

(11) **EP 2 733 119 A1**

(12) ## EUROPEAN PATENT APPLICATION

(43) Date of publication:
**21.05.2014 Bulletin 2014/21**

(51) Int Cl.:
***C02F 1/28*** *(2006.01)*   ***B01J 20/28*** *(2006.01)*
*C02F 103/00* *(2006.01)*   *C02F 101/10* *(2006.01)*
*B01J 20/04* *(2006.01)*

(21) Application number: **12461558.4**

(22) Date of filing: **21.11.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.11.2012 PL 40168912**

(71) Applicant: **Zachodniopomorski Uniwersytet
Technologiczny w
Szczecinie
70-310 Szczecin (PL)**

(72) Inventors:
• **Siwek, Hanna
70-736 Szczecin (PL)**

• **Wlodarczyk, Malgorzata
71-176 Szczecin (PL)**
• **Bartkowiak, Artur
71-667 Szczecin (PL)**
• **Sobecka, Katarzyna
71-742 Szczecin (PL)**

(74) Representative: **Zawadzka, Renata
Zachodniopomorski Uniwersytet
Technologiczny w Szczecinie
Dziel Wynalazczosci i Ochrony Patentowej
al. Piastow 17
70-310 Szczecin (PL)**

(54) **Agent for removing dissolved phosphorus compounds from water**

(57)    Agent for removing dissolved phosphorus compounds from water according to the invention, containing a biopolymer and metal compound, is characterized by being in the form of spherical capsules which comprise the biopolymer or derivatives thereof with the ionic character crosslinked in the presence of at least one water-soluble polyvalent metal compounds

## Description

The present invention provides a novel agent for removing dissolved phosphorus compounds from water. This agent is based on a biopolymer with the ionic character which is crosslinked in the presence of water-soluble polyvalent metal compounds.

The monitoring and experimental studies have been carried out for many years on the reasons and the rate of eutrophication of aquatic ecosystems, which revealed that, in the majority of cases, the content of phosphorus remains the primary factor controlling excessive growth of plankton organisms in water. A deficiency of this element in the aquatic environment leads to a significant limitation of biomass growth, whereas its excess usually accelerates this process. The trophy of aquatic reservoirs is determined not only by the total phosphorus content in water, but also by its management in aquatic depths and in the bottom sediments as well as the availability of phosphate ions assimilable by living organisms.

There are known and used several methods including mechanical, biological and chemical are available for reducing the availability of bio-assimilable forms of phosphorus in the aquatic ecosystems. The chemical methods rely on introducing substances into aquatic depths or in the bottom sediments that cause binding of dissolved phosphorus compounds. For this purpose are primarily used the substances containing the multivalent metals in the form of the following compounds: $Al(OH)_3$ [TANDYRAK R., LOSSOW K., GAWROŃSKA H., 2001. Long-term changes of environmental conditions in a lake resort by phosphorus inactivation. Limnological Review 1, 263], $Al_2(SO_4)_3$ [HULLEBUSCH E., DELUCHATE V., CHAZAL P.M., BAUDU M., 2002. Environmental impact of two successive chemical treatments in a small shallow eutrophied lake: Part I. Case of aluminium sulphate. Environmental Pollution 120, 617], $CaCO_3$, $Ca(OH)_2$ [DITTRICH M., KOSCHEL R., 2002. Interactions between calcite precipitation (natural and artificial) and phosphorus cycle in the hardwater lake. Hydrobiologia 469, 49; PREPAS E.E., MURPHY T.P., CROSBY J.M., WALTY D.T., LIM J.T., BABIN T., 1990, Reduction of phosphorus and chlorophyll a concentrations following CaCO3 and Ca(OH)2 additions to hypereutrophic Figure Eight Lake, Alberta. J., Environ. Sci. Technol. 24(8), 1252-1258], $Fe_2(SO_4)_3$, $FeSO_4$ [DE 1907359; PERKINS R.G., UNDERWOOD G.J.C., 2001. The potential for phosphorus release across the sediment-water interface in an eutrophic reservoir dosed with ferric sulphate. Wat. Res. 35(6) s.1399-1406], $FeCl_3$ $FeCl_2$ [DE 1907359, Wisniewski, 1999; Deppe, Benndorf, 2002] or in the form of double salts $FeCISO_4$ [JAEGER D., 1994. Effects of hypolimnetic water aeration and iron-phosphate precipitation on the trophic level of Lake Krupunder. Hydrobiologia 275-276, 1: 433-444].

Among the above-mentioned compounds the most frequently used are the iron compounds, which exhibit the double-action type mechanism. The first mechanism relies on the hydrolysis of iron compounds to form hydroxides, which proceeds the most intense at elevated pH. The iron hydroxides produced at the appropriate high redox potential (greater than 200mV) form insoluble complexes and settle down at the bottom absorbing phosphorus compounds at the same time. The second mechanism of phosphate ions adsorption relies on the precipitation of sparingly soluble iron (III) phosphates (V), whereas the amount of phosphorus bind in this way is a number of times smaller than the amount of phosphorus absorbed by the hydroxides.

Because the coagulation processes in the natural waters are accompanied by the adsorption process of different forms of phosphorus, the mineral sorbents are added to water, for instance, goethite FeOOH in order to increase their rate and to decrease the desorption of phosphorus compounds from the bottom sediments [GEELHOED J. S., HIEMSTRA T., VAN RIEMSDIJK W. H., 1997. Phosphate and sulfate adsorption on goethite: Single anion and competitive adsorption. Geochemica et Cosmochimica Acta. 61, 12, 2389-2396]. Moreover, the waste containing iron, for instance, iron powder and iron (III) oxide have been also investigated [CHITRAKAR R., SATOKO T., SONODA A., SAKANE K., OOI K., HIROTSU T., 2005. Phosphate adsorption on synthetic goethite and akaganeite. Journal of Colloid and Interface Science 298, 602]. Another widely promoted adsorbent is Phoslock, which is mainly composed of bentonite modified with lanthanum [EP1012123, US6350383, Haghseresht i in., 2009]. Phoslock forms with phosphorus a stable compound known as rhabdophane (EP1012123B1). The other adsorbents on the basic of bentonite have been also prepared in the form of beads or pastes (for instance, preparates under the general name SINOBENT patent application Nr 388253 [Dondajewska i In., 2010; Goldyn i In., 2010].

The sorption properties of natural polysaccharide in the form of hydrogel capsules, such as calcium alginate, have been confirmed, amongst others in the research concerning the purification of water from radionuclides [MIMURA H., HOSHI H., AKIBA K., ONODERA Y. Separation of americium from europium by biopolymer microcapsules enclosing Cyanex 301 extractant. J. Radioanal.Nucl.Chem., 247(2), 375, 2001] and heavy metals [NAYAK D., LAHIRI S., 2006; Biosorption of toxic, heavy, no-carrier-added radionuclides by calcium alginate beads. J. Radioanal. Nucl. Chem. 267, 59]. The biosorbents, which contain the carboxylic groups in their structure are characterized by a natural affinity to form complexes with metal cations. However, after the chemical modification relying on the incorporation of multivalent metal ions into their surface structure, the biopolymers are transformed into an adsorbent with anion sorption capacity. In the case of calcium alginate through such modification with Fe (III) one can prepared the adsorbents for removing oxyanions containing Se (IV) and As (V) from water [MIN H.J., HERING J.G., 1999. Removal of selenite and chromate using Fe (III) - doped alginate gels. Water Environ. Res. 71, 169-175]. In the available literature, the only system of such type for the adsorption of phosphate ions from the aqueous phase was an alginate/zirconium sulphate matrix, which was characterized by better sorption capacity than that of zirconium sulphate in a powdered form [YEON K.-H., PARK H., LEE S.-H., PARK Y.-M., LEE S._H., IWAMOTO M. Zirconium mesostructure immobilized in calcium alginate for phosphate removel. Korean J.Chem.Eng., 25(5), 1040, 2008]. A very high price of zirconium salt and a complex preparation technology of systems thereof, requiring the application of surfactants, and therefore significantly restricts the possibility of practical utilization of said solution. The research carried out in the case of other biosorbents confirmed that the immobilization of iron in their structure significantly enhances the affinity of phosphate ions for these biopolymers [EBERHARDT L.T., MIN S.H., HAN J.S., 2006. Phosphate removal by refined aspen wood fiber treated with carboxymethyl cellulose and ferrous chloride. Bioresour. Technol. 97, 2371 oraz EBERHARDT L.T., MIN S.H. 2008. Biosorbents prepared from wood particles treated with anionic polymer and iron salt: Effect of particle size on phosphate adsorption. Bioresour. Technol. 99, 626].

The objective of the present invention is to provide a pro-environmental agent for binding dissolved phosphorus compounds with the contribution of polyvalent metal ions immobilized in the structures of biopolymer substrates having the ionic character.

Said agent for the removal of dissolved phosphorus compounds from water, according to the invention, containing a biopolymer and metal compound, is characterized by being in the form of spherical capsules which comprise the biopolymer or derivatives thereof with the ionic character crosslinked in the presence of at least one water-soluble polyvalent metal compound. During the crosslinking a polyvalent metal ion is immobilized in the structure of biopolymer with the ionic character or derivatives thereof.

Preferably said spherical capsule has additionally immobilized at least one polyvalent metal compound, which is water sparingly soluble in order to increase the phosphate ions binding capacity of said capsule.

Preferably said biopolymer or derivatives thereof with the ionic character is the naturally occurring polysaccharides classified to the groups of so-called extracted from see algae, that is, alginate and/or carrageenans (kappa, iota and lambda differing in the degree of substitution by the sulfonic groups). The application of other polysaccharides gelling under the influence of polyvalent metal cations such, for example, microbiological origin gellan and/or xanthate and the like is also possible.

A water soluble polyvalent metal compound is calcium bicarbonate and/or calcium chloride and/or calcium nitrate (V) and/or calcium acetate and/or calcium oxalate and/or calcium formate and/or iron(III) chloride and/or iron(II) and/or iron(III) nitrate(V) and/or iron(II) nitrate(V) and/or iron(III) sulphate(VI) and/or iron(II) and/or iron(II) sulphate(VI) and/or iron(II) oxalate and/or iron(II) acetate and/or iron(III) oxalate and/or zinc sulphate(VI) and/or zinc chloride and/or zinc nitrate(V) and/or zinc acetate.

A sparingly water-soluble polyvalent metal compound is calcium carbonate and/or calcium hydroxide and/or iron(II) carbonate and/or manganese(II) carbonate and/or manganese(II) hydroxide and/or manganese(II) oxide and/or oxides and/or hydroxides of iron: magnetite, hematite limonite, goethite.

Said biopolymer or derivatives thereof constitutes a matrix for the metal ions. The prepared hydrogel matrixes comprise alginate/polyvalent metal cation or κ-carrageenon/polyvalent metal cation or xanthate/polyvalent metal cation or gellan/polyvalent metal cation. The agent is prepared by a drop-wise addition method. The capsules are formed through the drop-wise addition of a aqueous solution of biopolymer or derivatives thereof with the ionic character into the solutions of bonded metal salts. The hydrogel matrixes containing the polyvalent metal compounds insoluble in water are prepared through the preparation of a suspension of immobilized compound and mixing of this suspension with biopolymer solution. Subsequently, the obtained mixture is injected in the form of separate droplets into a aqueous solution of gelling salt. The hydrogel matrixes containing the polyvalent metal compounds insoluble in water are prepared through the cross-linking of sodium alginate solution and ι-carrageenon in the presence of at least one polyvalent metal compound dissolved in water. In both cases, after the injection of the last drop of suspension, the formed capsules are stirred over a period from 5 to 30 min. and then the capsules are washed in distilled water. Although the application of shorter reaction time is possible, such systems are most often characterized by an incomplete degree of saturation/binding of cross-linking metal cations. The application of cross-linking time of more than 30 minutes does not influence in a substantial way on the improvement of utility properties of obtained spherical hydrogels.

The main advantage of described invention is primarily the multifunctionality, high effectiveness and the long-term performance over a wide pH range and the oxidation-reduction potential. With the application of said agent, the binding of phosphorus may proceed via (i) adsorption of soluble and insoluble forms of phosphorus on the porous structure of capsules activated by immobilized metal ions or polyvalent metals and (ii) via the gradual release of said ions. The second of the above-mentioned mechanisms may ensure a constant gradient of the coagulant concentrations in over-bottom layer and may shift the equilibrium of dissolution and precipitation reactions of phosphates. In the proposed method, a polymer network of polyelectrolyte complex in the form of spherical capsules may contain the anionic groups with different character, both strong sulphate groups as well as and/or the weak carboxyl groups, owing to which the kinetics of adsorption and desorption of the components may be controlled in a various way through the quantitative changes of components, for instance, the rate of release of the metal ions may be initially high and later significantly slower.

In differentiate from the best absorbents and coagulants currently applied, the application of proposed matrix creates a potential possibility of various formation of substrate and the removal of said substrate from the aquatic environment in whichever time. An additional advantage of said substrate is its capability to limit resuspension of sediments.

In accordance with the present invention is obtained a totally biodegradable agent the components of which comprise the substances naturally occurring in the aquatic environment. The agent acts practically in the same way independently on the value of pH within the range of pH determined in natural water basin. The said agent also acts under the reduction conditions, even at the redox potential <200mV. During the application of traditional coagulants and adsorbents, the reduction of $Fe^{3+}$ to $Fe^{2+}$ already proceeds at the redox potential <300mV, what leads to the desorption of phosphate ions. To differentiate from other adsorbents said agent limits the sediments resuspension, but it does not form the impermeable layer of adsorbent on the sediment surface. In the case of other adsorbents, such layer renders difficult the gaseous exchange between the water and sediment and this layer has an unfavorable influence on the organisms living in the bottom zone, and frequently changes the biological character of remediated water basin. The agent according to the invention may be freely formed, what allows for the eventual removal thereof together with adsorbed phosphorus from the aquatic environment and the regeneration of said agent. The state of the art indicates that in the case of all agents proposed so far, there are no possibilities for removal thereof from the aquatic environment.

In comparison to the most effective among described absorbents - Phoslock, the proposed agent is cheaper and the intermediate resources for the manufacture of said agent are practically unlimited. The said agent is safe for the transport and may by easily introduced into the aquatic environment. Many of currently used coagulants, for instance, iron (III) chloride solution, exhibit a corrosion action against the feeder device.

The preferred embodiment of the invention is presented in the following examples. The examples from I to IX illustrate the preparation of said agent which is crosslinked by at least one water-soluble polyvalent metal compound, examples from X to XVIII illustrate the preparation of said agent which is crosslinked by a water-soluble compound and additionally containing at least one sparingly soluble compound, example XIX illustrates the influence of agent containing different biopolymers or polyvalent metals on the change of phosphate concentration in water, example XX illustrates the binding of phosphate ions with the contribution of alginate/$FeCl_3$ and alginate/goethite agent, example XXI illustrates the effect of pH on the adsorption of phosphate ions in water, example XXII illustrates the influence of the redox potential on the adsorption of the phosphate ions in water with the application of alginate/$FeCl_3$ agent. In examples I-XVIII the reaction time is typically between 10-15 minutes and final ratio of sodium alginate to metal salt solutions is not higher than 1/10.

**Example I**

The preparation of a hydrogel matrix containing the water-soluble polyvalent metal compounds - the **alginate/FeCl₃** system (alginate cross-linked with **FeCl₃**)

The hydrogel capsules are prepared by the drop-wise addition of a sodium alginate solution with the molecular weight higher than 100,000 g/mol and a concentration of 1.5% into a solution of iron (III) chloride at a concentration of 0.062 mol·dm$^{-3}$. During the formation of capsules the iron (III) chloride solution is continuously stirred at a constant stirring rate of 600 revolutions per minute. The capsules formed in this way have the diameter ranging between about 2.5 and 3.5 mm.

**Example II**

The hydrogel capsules prepared in the same manner as in Example I, wherein a solution of iron (III) chloride is used at a concentration of 0.775 mol·dm$^{-3}$. The capsules formed in this way have the diameter ranging between about 2.5 and 3.5 mm.

**Example III**

The hydrogel capsules prepared in the same manner as in Example I, wherein a solution of iron (III) chloride is used at a concentration of 0.155 mol·dm$^{-3}$. The capsules formed in this way have the diameter ranging between about 2.5 to 3.5 mm.

**Example IV**

The preparation of a hydrogel matrix containing the water-soluble polyvalent metal compounds - the **algi-**

nate/ZnCl$_2$/FeCl$_3$ system.

The hydrogel capsules are prepared by the drop-wise addition of a sodium alginate solution at a concentration of 1.5% into a ZnCl$_2$ and FeCl$_3$ solution in which the concentration of each salt amounted to 0.062 mol·dm$^{-3}$. During the formation of capsules the solution containing both salts ZnCl$_2$ and FeCl$_3$ is continuously stirred at a constant stirring rate of 600 revolutions per minute. The capsules formed in this way have the diameter ranging between about 2.5 and 3.5 mm

**Example V**

The preparation of a hydrogel matrix containing the water-soluble polyvalent metal compounds - the **alginate/ZnSO$_4$** system.

The hydrogel capsules are prepared by the drop-wise addition of sodium alginate solution at a concentration of 1.5% into ZnSO$_4$ solutions at a concentration of 0.155 mol·dm$^{-3}$ (alternatively at concentrations of 0.062 and 1 mol·dm$^{-3}$). During the formation of capsules the ZnSO$_4$ solution is continuously stirred at a constant stirring rate of 600 revolutions per minute. The capsules formed in this way have the diameter ranging between about 2.5 and 3.5 mm

**Example VI**

The preparation of a hydrogel matrix containing the water-soluble polyvalent metal compounds - the κ-**carrageenon/FeCl$_3$** system.

The hydrogel capsules are prepared by the drop-wise addition of κ-carrageenon solution at a concentration of 1.5% (alternatively at a concentration of 2%) into the FeCl$_3$ solutions at a concentration of 0.155 mol·dm$^{-3}$ (alternatively at concentrations of 0.062 and 0.775 mol·dm$^{-3}$). During the formation of capsules the FeCl$_3$ solution is continuously stirred at a constant stirring rate of 600 revolutions per minute. The capsules formed in this way have the diameter ranging between about 2.5 and 3.5 mm.

**Example VII**

The preparation of a hydrogel matrix containing the water-soluble polyvalent metal compounds - the **alginate/κ-carrageenon/FeCl$_3$** system.

A solution of κ-carrageenon at a concentration of 1.5% and a solution of alginate at a concentration of 1.5% are prepared and both solutions are then mixed together at a constant stirring rate of 600 revolutions per minute. The hydrogel capsules are prepared by the drop-wise addition of the obtained solution of κ-carrageenon and alginate into the FeCl$_3$ solutions at a concentration of 0.155 mol·dm$^{-3}$ (alternatively at concentrations of 0.062 and 0.775 mol·dm$^{-3}$). During the formation of capsules the FeCl$_3$ solution is continuously stirred at a constant stirring rate of 600 revolutions per minute. The capsules formed in this way have the diameter ranging between about 2.5 and 3.5 mm.

**Example VIII**

The preparation of a hydrogel matrix containing the water-soluble polyvalent metal compounds - the **xanthate/FeCl$_3$** system.

The hydrogel capsules are prepared by the drop-wise addition of xanthate solution at a concentration of 1.5% into the FeCl$_3$ solutions at concentration of 0.155 mol·dm$^{-3}$ (alternatively at concentrations of 0.062 and 0.775 mol/dm$^3$). During the formation of capsules the FeCl$_3$ solution is continuously stirred at a constant stirring rate of 600 revolutions per minute. The capsules formed in this way have irregular shapes close to a sphere with the diameter ranging between about 2.5 and 3.5 mm.

**Example IX**

The preparation of a hydrogel matrix containing the polyvalent metal compounds soluble in water - the **gellane/FeCl$_3$** system.

The hydrogel capsules are prepared by the drop-wise addition of gellane solution at a concentration of 1.5% into the FeCl$_3$ solutions at a concentration of 0.155 mol·dm$^{-3}$ (alternatively at concentration of 0.062 and 0.775 mol·dm$^{-3}$). During the formation of capsules the FeCl$_3$ solution is subjected to a continuous stirring at constant revolutions of 600 rpm. The capsules formed in this way are characterized by a disk-like shape with the diameter ranging between about 3.0 and 5.0 mm and a height from 1.0 to 2.0 mm.

**Example X**

The preparation of a hydrogel matrix containing the water sparingly soluble polyvalent metal compounds insoluble in water - the **alginate/goethite** suspension cross-linked with **CaCl$_2$.**

The hydrogel capsules are prepared by the drop-wise addition of suspension which is composed of 1.5% of sodium alginate and goethite with a content of 2 g goethite in 100 ml mixture thereof into a CaCl$_2$ solution at a concentration of 0.155 mol·dm$^{-3}$. The obtained capsules are stirred over a period of 15 minutes and washed with distilled water for two times for 10 minutes. The capsules formed in this way have the diameter ranging between about 2.5 and 3.5 and have an intensive dark brown colour characteristic for goethite. A decrease in the flexibility of obtained capsules is observed simultaneously.

**Example XI**

The agent prepared in the same manner as in Example X, wherein said goethite is used in the amount of 6 g in 100 ml of mixture thereof. The capsules formed in this way have the diameter ranging between about 2.5 and 3.5 mm and have an intensive dark brown colour characteristic for goethite. A decrease in the flexibility of obtained capsules is observed simultaneously.

**Example XII**

The agent prepared in the same manner as in Example X, wherein said goethite is used in the amount of 10g in 100 ml of mixture thereof. The capsules formed in this way have the diameter ranging between about 2.5 and 3.5 mm and have an intensive dark brown colour characteristic for goethite. A decrease in the flexibility of obtained capsules is observed simultaneously along with an increase in the amount of applied goethite.

**Example XIII**

The preparation of a hydrogel matrix containing the water sparingly soluble polyvalent metal compounds - the **alginate/CaCO$_3$** suspension cross-linked with **ZnSO$_4$** solution

The hydrogel capsules are obtained by preparing a suspension which is composed of 1.5% sodium alginate solution and CaCO$_3$ with a content of 0.5 g (also 0.1 and 0.2 or 1 g) in 100 ml of the alginate solution and said suspension is drop-wise added into a ZnSO$_4$ solution at a concentration of 0.155 mol·dm$^{-3}$. The obtained capsules are stirred over a period of 15 minutes and washed with distilled water for two times for 10 minutes. The capsules formed in this way have the diameter ranging between about 2.5 and 3.5.

**Example XIV**

The preparation of a hydrogel matrix containing the water sparingly soluble polyvalent metal compounds - the **alginate/ CaCO$_3$** suspension cross-linked with **FeCl$_3$** solution.

The hydrogel capsules are obtained by preparing a suspension which is composed of 1.5% sodium alginate solution and CaCO$_3$ with a content of 0.5 g (alternatively 0.1 and 0.2 or 1 g) in 100 ml of the alginate solution and said suspension is drop-wise added into a FeCl$_3$ solution at a concentration of 0.155 mol·dm$^{-3}$. The obtained capsules are stirred over a period of 15 minutes and washed with distilled water for two times for 10 minutes. The capsules formed in this way have the diameter ranging between about 2.5 and 3.5.

**Example XV**

The preparation of a hydrogel matrix containing the water sparingly soluble polyvalent metal compounds - the **alginate/CaCO$_3$/MnO$_2$** suspension cross-linked with **ZnSO$_4$** solution.

The hydrogel capsules are obtained by preparing a suspension which is composed of 1.5% sodium alginate solution and CaCO$_3$ and MnO$_2$ (1:1) with a content of 0.5 g of each compound in 100 ml of the alginate solution and said suspension is drop-wise added into a ZnSO$_4$ solution at a concentration of 0.155 mol·dm$^{-3}$. The obtained capsules are stirred over a period of 15 minutes and washed with distilled water for two times for 10 minutes. The capsules formed in this way have the diameter ranging between about 2.5 and 3.5.

**Example XVI**

The preparation of a hydrogel matrix containing the water sparingly soluble polyvalent metal compounds - the

**alginate/Fe$_2$O$_3$/MnO$_2$** suspension cross-linked with **ZnSO$_4$** solution.

The hydrogel capsules are obtained by preparing a suspension which is composed of 1.5% sodium alginate solution and MnO$_2$ and Fe$_2$O$_3$ (1:6) with a content of 0.857 g Fe$_2$O$_3$ and 0.143 g MnO$_2$ in 100 ml of the alginate solution and said suspension is drop-wise added into a ZnSO$_4$ solution at a concentration of 0.155 mol·dm$^{-3}$. The obtained capsules are stirred over a period of 15 minutes and washed with distilled water for two times for 10 minutes. The capsules formed in this way have the diameter ranging between about 2.5 and 3.5.

### Example XVII

The preparation of hydrogel matrix containing the water sparingly soluble polyvalent metal compounds - the **alginate/Fe$_2$O$_3$/MnO$_2$** suspension cross-linked with **FeCl$_3$** solution.

The hydrogel capsules are obtained by preparing a suspension which is composed of 1.5% solution of sodium alginate and MnO$_2$ and Fe$_2$O$_3$(1:6) with a content of 0.857 g Fe$_2$O$_3$ and 0.143 g MnO$_2$ in 100 ml of the alginate solution and said suspension is drop-wise added into a FeCl$_3$ solution at a concentration of 0.155 mol·dm$^{-3}$. The obtained capsules are stirred over a period of 15 minutes and washed with distilled water for two times for 10 minutes. The capsules formed in this way have the diameter ranging between about 2.5 and 3.5.

### Example XVIII

The preparation of a hydrogel matrix containing the water sparingly soluble polyvalent metal compounds - the **alginate/Fe$_2$O$_3$/MnO$_2$** suspension cross-linked with **CaCl$_2$** solution.

The hydrogel capsules are obtained by preparing a suspension which is composed of 1.5% solution of sodium alginate and MnO$_2$ and Fe$_2$O$_3$ (1:6) with a content of 0.857 g Fe$_2$O$_3$ and 0.143 g MnO$_2$ in 100 ml of the alginate solution and said suspension is drop-wise added into a CaCl$_2$ solution at a concentration of 0.155 mol·dm$^{-3}$. The obtained capsules are stirred over a period of 15 minutes and washed with distilled water for two times for 10 minutes. The capsules formed in this way have the diameter ranging between about 2.5 and 3.5.

Characteristics of the hydrogel adsorbents obtained according to Examples I-XVIII (selected physicochemical properties) is presented in Table 1.

Table 1.

| Adsorbent | Content of salt or metals [g·lcm$^{-3}$ of polysaccharide solution] | | | | | | | Content of water in capsules [%] | Maximum compression strength [N] |
|---|---|---|---|---|---|---|---|---|---|
| | CaCO 3 | MnO$_2$ | Fe$_2$O$_3$ | getyt | Zn | Fe | Ca | | |
| alginate/FeCl$_3$ | - | - | - | - | - | 0.001÷0.010 | - | 98.5 | >6.5 |
| alginate/ZnSO$_4$ | - | - | - | - | 0.001÷0.01 | - | - | 98.1 | >2.0 |
| alginate/ZnCl$_2$/ FeCl$_3$ | - | - | - | - | 0.001÷0.01 | 0.001÷0.010 | - | 96.9 | >2.0 |
| alginate/CaCl$_2$/ goethite | | | | 0.02÷0.1 | | | 0.001÷0.01 | 91.8 | >5.0 |
| alginate/ZnSO$_4$/ CaCO$_3$ | 0.067÷0.667 | - | - | - | 0.001÷0.01 | - | - | 97.0 | >2.0 |
| alginate/FeCl$_3$/ CaCO$_3$ | 0.067÷0.667 | - | - | - | - | 0.001÷0.01 | - | 98.0 | >2.0 |
| alginate/ZnSO$_4$/ CaCO$_3$/MnO$_2$ | 0.333 | 0.095 | - | - | 0.001÷0.01 | - | - | 96.4 | >2.0 |
| alginate/ZnSO$_4$/ Fe$_2$O$_3$/MnO$_2$ | - | 0.095 | 0.571 | - | 0.001÷0.01 | - | - | 99.0 | >2.0 |
| alginate/FeCl$_3$/ Fe$_2$O$_3$/MnO$_2$ | - | 0.095 | 0.571 | - | - | 0.001÷0.01 | - | 96.1 | > 2.0 |
| alginate/CaCl$_2$ /Fe$_2$O$_3$/MnO$_2$ | - | 0.095 | 0.571 | - | 0.001÷0.01 | - | - | 98.2 | > 2.0 |
| κ-carrageenon/ FeCl$_3$ | - | - | - | - | - | 0.001÷0.010 | - | 97.0 | >4.5 |
| alginate/κ-carrageenon/ FeCl$_3$ | | | | | | 0.001÷0.010 | | 97.6 | >2.05 |
| xanthate/ FeCl$_3$ | - | - | - | - | - | 0.001 ÷ 0,010 | - | 96.7 | >2.0 |
| gellan/ FeCl$_3$ | - | - | - | - | - | 0.001 ÷ 0.010 | | 98.3 | >2.0 |

EP 2 733 119 A1

**Example XIX**

The $KH_2PO_4$ solutions at a concentration of 15 mgP·dm$^{-3}$ were prepared from deionised water (DIW) and two natural waters originated from polymictic inland water basins (W1, W2 - differing in a content of dissolved compounds, electrical conductivity thereof amounted to 369 and 124 $\mu$S·cm$^{-1}$ respectively). The prepared solutions containing the phosphate ions are measured out in 50 ml to the Erlenmeyer flasks closed with ground joint and the portions of capsules or Phoslock with a mass of 0.01 g (dry matter) were added. The control samples without the adsorbent were prepared in the same manner. All the tests were made in triplicate. The adsorption process proceeds at a temperature of 20°C, the changes of the phosphate ions content in the solutions were studied after attaining the equilibrium state (48 h). Table 2 presents the phosphate adsorption by the hydrogel adsorbents according to the invention and by a commercial product dedicated to bind phosphates under the trade name Phoslock.

Table 2.

| Adsorbent | Adsorption [mgP·g$^{-1}$ dry matter of adsorbent] | |
|---|---|---|
| | W1 | W2 |
| alginate/FeCl$_3$; | 11.57 | 11.12 |
| alginate/ZnSO$_4$ | 11.62 | 8.10 |
| alginate/ZnCl$_2$/FeCl$_3$ | 11.82 | 7.85 |
| alginate/CaCl$_2$/goethite | 9.96 | 9.89 |
| alginate/ZnSO$_4$/CaCO$_3$ | 9.94 | 9.92 |
| alginate/FeCl$_3$/CaCO$_3$ | 11.49 | 11.69 |
| alginate/ZnSO$_4$/CaCO$_3$/MnO$_2$ | 9.47 | 8.66 |
| alginate/ZnSO$_4$/Fe$_2$O$_3$/MnO$_2$ | 9.32 | 9.67 |
| alginate/FeCl$_3$/Fe$_2$O$_3$/MnO$_2$ | 5.28 | 6.34 |
| alginate/CaCl$_2$/Fe$_2$O$_3$;MnO$_2$ | 1.86 | 0.58 |
| $\kappa$-carrageenon/FeCl$_3$ | 12.40 | 12.21 |
| alginate /$\kappa$-carrageenon/FeCl$_3$ | 11.92 | 11.86 |
| xanthate/FeCl$_3$ | 8.57 | 7.41 |
| gellan/FeCl$_3$ | 7.86 | 8.32 |
| Phoslock | 11.20 | 11.20 |

The phosphate ions exhibit the adsorption affinity to all the adsorbents studied. The largest adsorption capacity was found for the adsorbents obtained by the gelation of the alginate solution with the solutions of ZnCl$_2$, ZnSO$_4$ or FeCl$_3$ salts. The alginate/FeCl$_3$ adsorbent bonded the discussed adsorbate from both studied solutions at a comparable level. A similar activity in the removal of the phosphate ions from aqueous solutions was also found for the process of adsorption thereof by the multicomponent alginate/FeCl$_3$/CaCO$_3$ capsules and by Phoslock.

**Example XX**

The $KH_2PO_4$ solutions with different content of the phosphate ions (1, 2, 4, 10, 20, 40, 80 mgPO$_4$·dm$^{-3}$) were prepared from deionised water (DIW) and two natural waters originated from eutrophic inland water basins (W1, W2 - differing in a content of dissolved compounds, electrical conductivity thereof amounted to 369 and 124 $\mu$S·cm$^{-1}$, respectively). The prepared solutions containing the phosphate ions are measured out in 25 ml to the Erlenmeyer flasks closed with ground joint and then the portions of capsules of the alginate/FeCl$_3$ type prepared according to Example III which dry matter amounted to 0.01 g were added. The analogous experiments were carried out by the addition of portions of capsules of the alginate/goethite type obtained according to Example X which dry matter amounted to 0.01 g into the prepared solutions containing the phosphate ions. The control samples without the capsules were prepared in the same manner. All the tests were made in triplicate. The adsorption process proceeds at a temperature of 20°C, the changes of the phosphate ions content in the solutions were studied after attaining the equilibrium state (48 h).
The sorption ability of hydrogel capsules was compared with the most effective agent currently used for phosphorus binding in the aquatic environment, namely with Phoslock. For this purpose, the DIW, W1 and W2 solutions containing the phosphate ions were measured out in 50 ml to the Erlenmeyer flasks closed with ground joint and Phoslock was then added to each solution in the amount of 0.0200 g. The control samples without Phoslock were prepared in the same manner, all the tests were made in triplicate. The adsorption process proceeds at a temperature of 20°C, the changes of the phosphate ion contents in the solutions were studied after attaining the equilibrium state (48 h). Table 3 presents the parameters of isotherms describing the adsorption process of the phosphate ions on the selected types of hydrogel capsules and Phoslock at temperature of 20°C.

Table 3

| Adsorbent | Solution | Freundlich* isotherm | | | Langmuir* isotherm | | |
|---|---|---|---|---|---|---|---|
| | | K | 1/n | r | $Q_{max}$ [mgP.g$^{-1}$s.m of adsorbent] | b [dm$^3$·mg$^{-1}$] | r |
| alginate/FeCl$_3$ | WD | 7.36 | 0.531 | 0.99 | 30.30 | 0.53 | 0.99 |
| | W1 | 16.98 | 0.422 | 0.95 | 43.48 | 1.92 | 1.00 |
| | W2 | 14.81 | 0.541 | 0.99 | 50.00 | 0.69 | 1.00 |
| alginate/goethite | WD | 6.08 | 0.373 | 0.97 | 18.02 | 0.76 | 0.99 |
| | W1 | 10.2 | 0.249 | 0.96 | 22.88 | 2.24 | 0.99 |
| | W2 | 11.2 | 0.279 | 0.99 | 25.58 | 1.16 | 1.00 |
| Phoslock | WD | 7.78 | 0.519 | 0.98 | 55.55 | 0.058 | 0.99 |
| | W1 | 7.88 | 0.502 | 0.97 | 55.55 | 0.117 | 0.96 |
| | W2 | 7.54 | 0.515 | 0.97 | 55.55 | 0.051 | 0.97 |

*Langmuir $\left( q_s = \frac{bQ_{max}C_s}{1+bC_s} \right)$; Freundlich $\left( q_s = K C_s^{\frac{1}{n}} \right)$

The highest adsorption capacity for the phosphate ions among the studied hydrogel capsules exhibit the alginate/FeCl$_3$ capsules. The maximum amount of phosphate ions adsorbed in the natural waters per 1g of dry matter of hydrogel capsules amounted to 43, 48 and 50,00 mgP·g$^{-1}$ and was comparable with the maximum adsorption of phosphate ions on Phoslock which amounted to 55.55 mgP.g$^{-1}$d.m of adsorbent.

**Example XXI**

The 7 solutions (DIW) of $KH_2PO_4$ and 7 natural waters enriched in this compound (W2) were prepared so that the concentration of each solution amounted to 10 mgPO$_4$$^{3-}$·dm$^{-3}$. The appropriate amounts of HCl or NaOH were added to each solution to achieve the pH: 4, 5, 6, 7, 8, 9, 10. The prepared solutions with different pH were added in various combinations in 25 ml to the Erlenmeyer flasks closed with ground joint and the portions of capsules of the alginate/FeCl$_3$ type prepared according to Example III which dry matter amounted to 0.01 g. The analogous experiments were carried out by the addition of portions of capsules of the alginate/goethite type obtained according to Example X which dry matter amounted to 0.01 g or by adding 0.0100 g of goethite. The control samples without the capsules and goethite were prepared in the same manner. All the samples were prepared in triplicate. The content of PO$_4$$^{3-}$ ions was measured in each sample after 48 h. The mixtures were shaken at a temperature of 20°C for 2 hours using a laboratory shaker at both the beginning and end of the binding process of phosphate ions.

## Diagram 1

The influence of pH of on the binding process of phosphate ions from solutions thereof with the contribution of said capsules of the alginate/$FeCl_3$ type in the studied solutions was presented in diagram 1. The amount of removed phosphates decreases along with increasing pH. The presented results indicate that the alginate/$FeCl_3$ adsorbent removes the phosphate ions in the pH range of natural waters which amounts from 4 to 10.

## Diagram 2

A comparison of the effect of the pH on the adsorption of phosphate ions by goethite and the alginate/goethite matrix is presented in diagram 2. A significant decrease of the sorption affinity to the phosphate ions proceeded along with the increase of pH. The alginate /goethite capsules removed the phosphate ions at a comparable level as goethite over a wide range of pH from 4 to 10.

### Example XXII

The studies have been carried out in the system bottom sediment/natural water enriched with $KH_2PO_4$ (W2) at a concentration of 10 $mgPO_4 \cdot dm^{-3}$. A 10 g of sediment and 100 $cm^3$ of water was added to each of the 250 ml beaker. In order to ensure the oxidative conditions the waters were saturated with oxygen, whereas by nitrogen in the case of the reductive conditions. For each combination 12 measurement series were prepared with the double repetition. The changes of the phosphate(V) ions content in the aqueous phase solutions were studied after attaining the equilibrium state. The studies concerning binding the phosphate ions with contribution of the alginate/ $FeCl_3$ matrix were carried out in the same system, for this purpose, a portion of capsules obtained according to Example III which dry matter amounted to 0.02 was added to each beaker.

The distribution coefficient of phosphate ions between the solid and liquid phases was calculated for given examples.

$$k = \frac{C_{se\dim ent}}{C_{water}}$$

Table 4.

| Redox conditions | System | Temperature [°C] | pH | Redox potential [mV] | Distribution coefficient | |
|---|---|---|---|---|---|---|
| | | | | | Average | Standard deviation |
| Oxidative | water/ sediment /capsules | 17.1 | 8.7 | 300.2 | 11.50 | 0.57 |
| | water/ sediment | 16.3 | 8.7 | 291,8 | 0.92 | 0.19 |
| Reductive | water/ sediment /capsules | 16.0 | 8.5 | 70,0 | 11.00 | 0.49 |
| | water/ sediment | 16.3 | 8.9 | 21.9 | 0.59 | 0.19 |

The parameters of processes investigated of phosphorus binding and the distribution coefficients between the solid and liquid phases of the phosphate ions were compiled in Table 4. A significantly larger value of this coefficient was found under reductive conditions in the water/sediment/capsules system. A change of the redox conditions from oxidative to the reductive causes that the distribution coefficient decreased by about 30% in the water/sediment system, whereas a substantial change of this coefficient was not found in the case of the water/sediment/capsule system. A lack of influence of the redox potential changes on the process of phosphate ions binding with the contribution of the capsules is very beneficial, because this potential is one of the fundamental factors influencing on the release of readily soluble phosphorus compounds from bottom sediments. These properties indicate a considerable predominance of said agent over other coagulants and adsorbents, which are used for the phosphorus binding in the water basins.

**Claims**

1.   An agent for removing dissolved phosphorus compounds from water containing a biopolymer and metal compound, **wherein** said agent has the form of spherical capsules which comprise the biopolymer or derivatives thereof with the ionic character cross-linked in the presence of at least one water-soluble polyvalent metal compound.

2.   An agent according to claim 1, **wherein** said spherical capsule has immobilized at least one water sparingly soluble polyvalent metal compound.

3.   An agent according to claim 1, **wherein** said biopolymer or derivatives thereof with the ionic character is alginate and/or κ-carrageenon and/or xanthate and/or gellan.

4.   An agent according to claim 1, **wherein** said water-soluble polyvalent metal compound is calcium bicarbonate and/or calcium chloride and/or calcium nitrate(V) and/or calcium acetate and/or calcium oxalate and/or calcium formate and/or iron(III) chloride and/or iron(II) and/or iron(III) nitrate(V) and/or iron(II) nitrate(V) and/or iron(III) sulphate(VI) and/or iron(II) and/or iron(II) sulphate(VI) and/or iron(II) oxalate and/or iron(II) acetate and/or iron(III) oxalate and/or zinc sulphate(VI) and/or zinc chloride and/or zinc nitrate(V) and/or zinc acetate.

5.   An agent according to claim 1, **wherein** said water sparingly soluble polyvalent metal compound is calcium carbonate and/or calcium hydroxide and/or iron(II) carbonate and/or manganese(II) carbonate and/or manganese(II) hydroxide and/or manganese(II) oxide and/or oxides and/or hydroxides of iron: magnetite, hematite limonite, goethite.

Europäisches
Patentamt

European
Patent Office

Office européen
des brevets

# EUROPEAN SEARCH REPORT

Application Number

EP 12 46 1558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 176 121 A1 (JAPAN SCIENCE & TECH CORP [JP] JAPAN SCIENCE & TECH AGENCY [JP]) 30 January 2002 (2002-01-30) * paragraphs [0013], [0018] - [0020], [0026]; claims; examples * | 1-5 | INV. C02F1/28 B01J20/28 ADD. C02F103/00 C02F101/10 B01J20/04 |
| X | JP H06 277504 A (EBARA INFILCO; EBARA RES CO LTD) 4 October 1994 (1994-10-04) * abstract * * paragraphs [0011] - [0013] * | 1-5 | |
| X | CN 102 247 811 A (UNIV SHANGHAI JIAOTONG) 23 November 2011 (2011-11-23) | 1,3,4 | |
| Y | * the whole document * * abstract * | 2,5 | |
| Y | JP H11 309449 A (EBARA CORP) 9 November 1999 (1999-11-09) * paragraphs [0013] - [0020] * | 1-5 | |
| X | EP 1 457 256 A1 (MUROMACHI CHEMICAL CO LTD [JP]) 15 September 2004 (2004-09-15) | 1,3,4 | TECHNICAL FIELDS SEARCHED (IPC) |
| Y | * paragraph [0010] * * paragraph [0026] - paragraph [0033] * | 2,5 | C02F B01J |
| X | WO 2004/071969 A1 (SOELL GMBH [DE]; KEDVES KORINNA [DE]) 26 August 2004 (2004-08-26) | 1,3 | |
| Y | * claims * | 2,4,5 | |

-/--

The present search report has been drawn up for all claims

| Place of search | Date of completion of the search | Examiner |
|---|---|---|
| Munich | 14 January 2014 | Kurtulan Dogan, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 12 46 1558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TAM S K ET AL: "Impact of residual contamination on the biofunctional properties of purified alginates used for cell encapsulation", BIOMATERIALS, ELSEVIER SCIENCE PUBLISHERS BV., BARKING, GB, vol. 27, no. 8, 1 March 2006 (2006-03-01), pages 1296-1305, XP027950882, ISSN: 0142-9612 [retrieved on 2006-03-01] * the whole document * | 1-5 | |
| A | US 2004/101944 A1 (WILLUWEIT THOMAS [DE] ET AL) 27 May 2004 (2004-05-27) * paragraphs [0022] - [0030], [0041] - paragraph [0030]; claims * | 1-5 | |

TECHNICAL FIELDS SEARCHED (IPC)

The present search report has been drawn up for all claims

| Place of search | Date of completion of the search | Examiner |
|---|---|---|
| Munich | 14 January 2014 | Kurtulan Dogan, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 46 1558

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2014

| Patent document cited in search report | | Publication date | Patent family member(s) | | Publication date |
|---|---|---|---|---|---|
| EP 1176121 | A1 | 30-01-2002 | CN 1340032 A | | 13-03-2002 |
| | | | DE 60036865 T2 | | 24-07-2008 |
| | | | EP 1176121 A1 | | 30-01-2002 |
| | | | JP 3521199 B2 | | 19-04-2004 |
| | | | JP 2000237763 A | | 05-09-2000 |
| | | | US 6716357 B1 | | 06-04-2004 |
| | | | WO 0048947 A1 | | 24-08-2000 |
| JP H06277504 | A | 04-10-1994 | NONE | | |
| CN 102247811 | A | 23-11-2011 | NONE | | |
| JP H11309449 | A | 09-11-1999 | NONE | | |
| EP 1457256 | A1 | 15-09-2004 | AU 2002357602 A1 | | 09-07-2003 |
| | | | CN 1606472 A | | 13-04-2005 |
| | | | EP 1457256 A1 | | 15-09-2004 |
| | | | KR 20040068312 A | | 30-07-2004 |
| | | | US 2005107253 A1 | | 19-05-2005 |
| | | | WO 03053565 A1 | | 03-07-2003 |
| WO 2004071969 | A1 | 26-08-2004 | DE 10327199 A1 | | 26-08-2004 |
| | | | EP 1597203 A1 | | 23-11-2005 |
| | | | WO 2004071969 A1 | | 26-08-2004 |
| US 2004101944 | A1 | 27-05-2004 | AT 350344 T | | 15-01-2007 |
| | | | AU 8992201 A | | 02-04-2002 |
| | | | DE 10047709 A1 | | 02-05-2002 |
| | | | EP 1322559 A1 | | 02-07-2003 |
| | | | US 2004101944 A1 | | 27-05-2004 |
| | | | WO 0224583 A1 | | 28-03-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 1907359
- EP 1012123 A
- US 6350383 B, Haghseresht i in.
- EP 1012123 B1
- WO 388253 A, SINOBENT

### Non-patent literature cited in the description

- **TANDYRAK R. ; LOSSOW K. ; GAWROŃSKA H.** Long-term changes of environmental conditions in a lake resort by phosphorus inactivation. *Limnological Review,* 2001, vol. 1, 263
- **HULLEBUSCH E. ; DELUCHATE V. ; CHAZAL P.M. ; BAUDU M.** Environmental impact of two successive chemical treatments in a small shallow eutrophied lake: Part I. Case of aluminium sulphate. *Environmental Pollution,* 2002, vol. 120, 617
- **DITTRICH M. ; KOSCHEL R.** Interactions between calcite precipitation (natural and artificial) and phosphorus cycle in the hardwater lake. *Hydrobiologia,* 2002, vol. 469, 49
- Reduction of phosphorus and chlorophyll a concentrations following CaCO3 and Ca(OH)2 additions to hypereutrophic Figure Eight Lake. **PREPAS E.E. ; MURPHY T.P. ; CROSBY J.M. ; WALTY D.T. ; LIM J.T. ; BABIN T.** Environ. Sci. Technol. 1990, vol. 24, 1252-1258
- **PERKINS R.G. ; UNDERWOOD G.J.C.** The potential for phosphorus release across the sediment-water interface in an eutrophic reservoir dosed with ferric sulphate. *Wat. Res.,* 2001, vol. 35 (6), 1399-1406
- **JAEGER D.** Effects of hypolimnetic water aeration and iron-phosphate precipitation on the trophic level of Lake Krupunder. *Hydrobiologia,* 1994, vol. 275-276 (1), 433-444
- **GEELHOED J. S. ; HIEMSTRA T. ; VAN RIEMSDIJK W. H.** Phosphate and sulfate adsorption on goethite: Single anion and competitive adsorption. *Geochemica et Cosmochimica Acta,* 1997, vol. 61 (12), 2389-2396
- **CHITRAKAR R. ; SATOKO T. ; SONODA A. ; SAKANE K. ; OOI K. ; HIROTSU T.** Phosphate adsorption on synthetic goethite and akaganeite. *Journal of Colloid and Interface Science,* 2005, vol. 298, 602
- **MIMURA H. ; HOSHI H. ; AKIBA K. ; ONODERA Y.** Separation of americium from europium by biopolymer microcapsules enclosing Cyanex 301 extractant. *J. Radioanal.Nucl.Chem.,* 2001, vol. 247 (2), 375
- **NAYAK D. ; LAHIRI S.** Biosorption of toxic, heavy, no-carrier-added radionuclides by calcium alginate beads. *J. Radioanal. Nucl. Chem.,* 2006, vol. 267, 59
- **MIN H.J. ; HERING J.G.** Removal of selenite and chromate using Fe (III) - doped alginate gels. *Water Environ. Res.,* 1999, vol. 71, 169-175
- **YEON K.-H. ; PARK H. ; LEE S.-H. ; PARK Y.-M. ; LEE S._H. ; IWAMOTO M.** Zirconium mesostructure immobilized in calcium alginate for phosphate removel. *Korean J.Chem.Eng.,* 2008, vol. 25 (5), 1040
- **EBERHARDT L.T. ; MIN S.H. ; HAN J.S.** Phosphate removal by refined aspen wood fiber treated with carboxymethyl cellulose and ferrous chloride. *Bioresour. Technol.,* 2006, vol. 97, 2371
- **EBERHARDT L.T. ; MIN S.H.** Biosorbents prepared from wood particles treated with anionic polymer and iron salt: Effect of particle size on phosphate adsorption. *Bioresour. Technol.,* 2008, vol. 99, 626